(19) Europäisches Patentamt
European Patent Office
Office européen des brevets

(11) EP 2 189 499 B1

(12) EUROPEAN PATENT SPECIFICATION

(45) Date of publication and mention of the grant of the patent:
**17.10.2012 Bulletin 2012/42**

(21) Application number: **08778167.0**

(22) Date of filing: **14.07.2008**

(51) Int Cl.:
***C08L 25/02*** *(2006.01)*
***C08F 2/26*** *(2006.01)*
***C09J 125/08*** *(2006.01)*
***C09J 129/04*** *(2006.01)*
***C08L 33/08*** *(2006.01)*
***C09J 133/08*** *(2006.01)*
***C08L 25/04*** *(2006.01)*
***C09J 125/04*** *(2006.01)*

(86) International application number:
**PCT/JP2008/062696**

(87) International publication number:
**WO 2009/011334 (22.01.2009 Gazette 2009/04)**

(54) **AQUEOUS SYNTHETIC RESIN EMULSION, RE-EMULSIFIABLE EMULSION POWDER, AND ADHESIVE COMPOSITION CONTAINING THE SAME**

WÄSSRIGE SYNTHETISCHE HARZEMULSION, WIEDEREMULGIERBARES EMULSIONSPULVER UND HAFTZUSAMMENSETZUNG DAMIT

EMULSION AQUEUSE DE RÉSINE SYNTHÉTIQUE, POUDRE POUR ÉMULSION RÉ-ÉMULSIFIABLE ET COMPOSITION ADHÉSIVE LA CONTENANT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.07.2007 JP 2007186478**

(43) Date of publication of application:
**26.05.2010 Bulletin 2010/21**

(73) Proprietor: **The Nippon Synthetic Chemical Industry Co., Ltd.**
**Osaka 530-0018 (JP)**

(72) Inventors:
- **SUGAYA, Mamoru**
**Shizuoka 436-0062 (JP)**
- **NISHIHASHI, Yoichiro**
**Gifu 503-0973 (JP)**
- **IWASAKI, Hiroyuki**
**Gunma 376-0041 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
**WO-A1-2007/060960**
**WO-A1-2007/060960**
**WO-A1-2007/074674**
**JP-A- 09 025 381**
**JP-A- 51 147 546**
**JP-A- 2006 124 682**
**JP-A- 2006 316 260**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 189 499 B1

## Description

The present invention relates to an aqueous synthetic resin emulsion and a re-emulsifiable emulsion powder. More particularly, the invention relates to an aqueous synthetic resin emulsion and a re-emulsifiable emulsion powder which form a film excellent in water resistance, warm-water resistance, boiling resistance, and long-term durability. These can be used in various applications including, in particular, adhesives for wood parts or woody materials or for paper or the like, inorganic finishing materials, coating materials, and admixtures for hydraulic materials such as cements and plaster.

## BACKGROUND ART

Polyvinyl alcohol (hereinafter often abbreviated to PVA) has conventionally been used as a protective colloid in order to impart mechanical stability and freezing stability to aqueous emulsions. The use of PVA improves the mechanical stability and freezing stability of emulsions. However, especially when hydrophobic monomers are mainly polymerized, there have frequently been cases where polymerization stability is insufficient and the emulsion obtained has insufficient long-term stability. This tendency has been strong especially in emulsions having a nonvolatile content as high as above 50% by weight

It is therefore necessary, in the case of using PVA as a protective colloid for a hydrophobic acrylic-based or styrene-based emulsion, that the nonvolatile contents of the emulsions should be regulated to 50% by weight or less. The use of PVA hence has had a problem concerning productivity. In addition, there has been a problem that the emulsions obtained are insufficient in stability, in particular, long-term stability, and increase in viscosity.

As a measure in overcoming those problems, it has been proposed to use various PVAs as an emulsifier/dispersant.

For example, patent document 1 proposes an aqueous emulsion containing a polymer and, a PVA which is adhered to the polymer, and contains an active-hydrogen group such as an acetoacetic ester group, mercapto group, or diacetone acrylamide group, has a block character [η] larger than 0.6 and a degree of saponification of 95.0% by mole or more, and is low in block nature, in order to improve mechanical stability, freezing stability, and stability to high-temperature standing.

Patent document 2 proposes an emulsion obtained by emulsion-polymerizing an ethylenically unsaturated monomer using as an emulsifier a modified PVA produced by saponifying a vinyl acetate/ethylenesulfonic acid alkali salt copolymer, which contains an ethylenesulfonic acid alkali salt, in order to inhibit viscosity from changing with the lapse of time and to thereby improve standing stability.

Patent document 3 proposes a stabilizer for emulsion polymerization which comprises a modified PVA having an average degree of saponification of 90% by mole or less and a sulfonic group content of 0.1 to 20% by mole.

Patent document 4 proposes an emulsion obtained using a styrene emulsifier/stabilizer comprising a modified PVA containing hydrocarbon groups having 4 or more carbon atoms and sulfonic groups or sulfuric ester groups in a side chain thereof. The patent document 4 shows that this emulsion has excellent stability and moderate viscosity, and proposes to use the emulsion as an adhesive, cement admixture or the like.

Patent document 5 proposes an aqueous emulsion containing polymer particles comprising at least one of ethylenically unsaturated monomers and diene-based monomers, wherein a PVA-based resin having acetoacetic acid groups and/or mercapto groups and having a block character of 0.3 to 0.6 are adsorbed on the surface of the polymer particles,.

Furthermore, patent document 6 proposes an aqueous emulsion containing an adsorbed PVA-based resin which has that block character and comprises acetoacetic-ester-group-containing PVAs which, when classified into specific particle-diameter ranges, have respective average degrees of acetoacetic esterification, the value obtained by dividing the maximum value of those average degrees by the minimum value thereof being 1.0 to 3.0.

Patent Document 1: JP-A-2003-277419
Patent Document 2: JP-A-50-155579
Patent Document 3: JP-A-10-060015
Patent Document 4: JP-A-58-063706
Patent Document 5: JP-A-2002-60406
Patent Document 6: JP-A-2005-272481

DISCLOSURE OF THE INVENTION

PROBLEMS THAT THE INVENTION IS TO SOLVE

However, the technique disclosed in patent document 1 is still unsatisfactory with respect to viscosity stability in long-term storage although an aqueous emulsion satisfactory in mechanical stability, freezing stability, and stability to high-temperature standing is obtained by the technique.
The techniques disclosed in patent documents 2 to 4 are insufficient in polymerization stability or result in a low degree of grafting and poor mechanical stability. Because of this, the emulsions are insufficient in stability to mixing with fillers and the like when used as an adhesive for wood parts/woody materials. Those techniques are hence still unsatisfactory.
Furthermore, the techniques disclosed in patent documents 5 and 6 each attain an improvement in the water resistance of films. In recent years, however, the adhesives for wood parts/woody materials which are especially for use in the production of structural laminated wood or the like are required to have improved long-term durability and are required to have higher water resistance, higher warm-water resistance, and higher boiling resistance. When these desires are taken into account, those techniques are still unsatisfactory and a further improvement has been desired.
Namely, in the prior art techniques described above, the physical properties attainable therewith are still unsatisfactory in adhesives for wood parts/woody materials, which are required to have a high level of water resistance, warm-water resistance, hot-water resistance, toughness, long-term durability, and the like, not to mention adhesion strength.
WO2007060960 discloses re-emulsifiable resin powders and their use as adhesive for wood material wherein the resin is obtained by the copolymerisation of 30 wt% or more of a hydrophobic monomer in the presence of an acetoacetate-modified polyvinyl alcohol as stabiliser.
WO2007/074674 discloses adhesive compositions for wood elements based on a synthetic resin powder comprising a water-based acrylic emulsion stabilised with a polyvinyl alcohol having 1.7 mol % or more of 1,2-diol functionality, wherein said 1,2-diol functionality is present in the main chain of said polyvinyl alcohol.
Re-emulsifiable emulsion powders produced by drying (e.g., spray-drying) aqueous synthetic resin emulsions have the following and other advantages. Since the re-emulsifiable emulsion powders are powdery, they are easy to handle as compared with the aqueous synthetic resin emulsions, which are mainly packed in cans or drums. The re-emulsifiable emulsion powders are usually packed in paper bags and, hence, advantageous also from the standpoints of product storage and transportation cost. Furthermore, compared to general aqueous synthetic resin emulsions, the re-emulsifiable resin powders are reduced in volatile components such as residual monomers. Since the re-emulsifiable powders contain no water, they never putrefy and do not necessitate an antifungal/preservative. For such reasons, the re-emulsifiable powders have come to be considered as an environmentally sound product. In addition, the re-emulsifiable emulsion powders, at time of use, can be re-emulsified in water by merely adding the powders to water and stirring the mixtures. Because of this, the re-emulsifiable emulsion powders are being extensively used not only mainly as an admixture for cement products such as concrete structures and mortar and for plaster putty but also in applications such as coating materials, inorganic finishing materials, and adhesives. There is hence a desire to commercialize an aqueous synthetic resin emulsion also as a re-emulsifiable emulsion powder.
Accordingly, an object of the invention is to provide, in view of such background, an aqueous synthetic resin emulsion which is stable even when having a nonvolatile content of 50% by weight or more and which has a relatively small particle diameter and is useful for forming a film excellent in water resistance, warm-water resistance, boiling resistance, toughness, and long-term durability; and a re-emulsiflable emulsion powder. Another object is to provide an adhesive composition in which these are used, in particular, an adhesive for wood parts/woody materials.

MEANS FOR SOLVING THE PROBLEMS

The present inventors diligently made investigations under such circumstances. As a result, they have found that when a PVA-based resin (a) having a 1,2-diol bond in a side chain thereof is used as a protective colloid (dispersion stabilizer) for an aqueous synthetic resin emulsion and hydrophobic monomers including a styrene-based monomer and having a solubility in water at 20°C of 0.1 % or less are used as copolymerizable monomers for the synthetic resin in a larger amount than before, then the resultant emulsion has the effect of giving a film excellent in water resistance, warm-water resistance, boiling resistance, toughness, and durability. The invention has been thus achieved.
Namely, essential points of the invention are as follows.
[1]An aqueous synthetic resin emulsion containing a synthetic resin dispersed and stabilized with a polyvinyl alcohol-based resin (a) having a 1,2-diol bond in a side chain thereof, wherein the synthetic resin comprises, as a polymerizable monomer which constitutes the synthetic resin, a hydrophobic monomer having a solubility in water at 20°C

of 0.1% or less in an amount of 30% by weight or more based on all polymerizable monomers, the hydrophobic monomer comprising a styrene-based monomer.

[2] The aqueous synthetic resin emulsion according to [1], wherein the polyvinyl alcohol-based resin (a) having a 1,2-diol bond in a side chain thereof has a 1,2-diol bond content of 1 to 15% by mole, an average degree of saponification of 85% by mole or more, and an average degree of polymerization of 50 to 3,000.

[3] The aqueous synthetic resin emulsion according to [1] or [2], wherein the synthetic resin has a glass transition temperature of from -20 to +30°C.

[4] The aqueous synthetic resin emulsion according to any one of [1] to [3], wherein at least part of the polyvinyl alcohol-based resin (a) having a 1,2-diol bond in a side chain thereof is grafted onto the synthetic resin.

[5] The aqueous synthetic resin emulsion according to any one of [1] to [4], wherein the synthetic resin further comprises, as a comonomer component, at least one functional monomer selected from the group consisting of the following (1) to (7):

(1) an allyl group-containing monomer,
(2) a glycidyl group-containing monomer,
(3) a monomer comprising a hydrolyzable silyl group,
(4) an acetoacetyl group-containing monomer,
(5) a monomer having two or more vinyl groups in the molecular structure,
(6) a carbonyl group-containing monomer, and
(7) a hydroxyl group-containing monomer.

[6] A re-emulsifiable emulsion powder which is a dried product of the aqueous synthetic resin emulsion according to any one of [1] to [5].

[7] An aqueous synthetic resin emulsion which is obtained by re-emulsifying the re-emulsifiable emulsion powder according to [6].

[8] An adhesive composition comprising the aqueous synthetic resin emulsion according to any one of [1] to [5] and [7] or the re-emulsifiable emulsion powder according to [6].

[9] The adhesive composition according to [8], which further comprises a cross-linking agent.

[10] The adhesive composition according to [8] or [9], which is used for an application to a wood part or woody material.

## ADVANTAGES OF THE INVENTION

The aqueous synthetic resin emulsion of the invention or the aqueous synthetic resin emulsion of the invention obtained by re-emulsifying the re-emulsifiable emulsion powder has the effect of giving a film excellent in water resistance, warm-water resistance, boiling resistance, toughness, and long-term durability. These are useful in various applications including, in particular, adhesives for wood parts or woody materials, for paper or the like, inorganic finishing materials, coating materials, and admixtures for hydraulic materials such as cements and plaster.

## BEST MODE FOR CARRYING OUT THE INVENTION

The invention will be explained below in detail.

The aqueous synthetic resin emulsion of the invention contains a synthetic resin dispersed and stabilized with a PVA-based resin (a) having a 1,2-diol bond in a side chain thereof. This emulsion is usually produced by using the PVA-based resin (a) having a 1,2-diol bond in a side chain thereof as a protective colloid (dispersion stabilizer) when emulsion polymerization.

In the invention, the PVA-based resin (a) having a 1,2-diol bond in a side chain thereof is known. Examples thereof generally include PVA-based resins containing 1,2-diol structural units represented by the following general formula (1).

[Chem. 1]

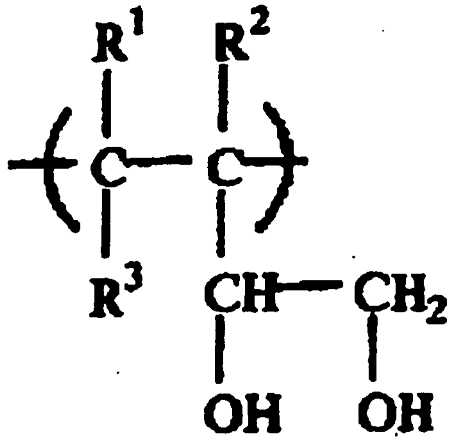

(1)

[In general formula (1), $R^1$, $R^2$, and $R^3$ each independently are hydrogen or an alkyl group having 1 to 4 carbon atoms.]

Such a PVA-based resin (a) is obtained, for example, by (I) a method in which a copolymer of vinyl acetate and 3,4-diacetoxy-1-butene is saponified, (II) a method in which a copolymer of vinyl acetate and vinylethylene carbonate is saponified and decarboxylated, (III) a method in which a copolymer of vinyl acetate and a 2,2-dialkyl-4-vinyl-1,3-dioxolane is saponified and subjected to the solvolysis of ketal structure, or (IV) a method in which a copolymer of vinyl acetate and glycerin monoallyl ether is saponified.

The PVA-based resin (a) having a 1,2-diol bond in a side chain thereof has a 1,2-diol bond content of preferably 1 to 15% by mole, more preferably 1 to 12% by mole, even more preferably 2 to 10% by mole, especially preferably 2 to 8% by mole. In the case where the 1,2-diol structural units are represented, for example, by the above general formula (1), the term " 1,2-diol bond content" herein means the molar proportion of the 1,2-diol bond structural units represented by the above general formula (1) which are contained in the PVA-based resin (a) having a 1,2-diol bond in a side chain thereof. In case where the 1,2-diol bond content is too low, the mechanical stability of the emulsion or the water resistance or the like of films tends to decrease. In case where the content thereof is too high, there is a tendency that stability during polymerization decreases and a stable emulsion having a high nonvolatile content is difficult to obtain.

The term "nonvolatile content" means the amount of the residue remaining after the thermal drying of the emulsion. Usually, the nonvolatile content can be determined from the weights as measured before and after thermal drying, according to the calculation method as provided for in JIS K 6828-1.

The PVA-based resin (a) having a 1,2-diol bond in a side chain thereof has an average degree of saponification of preferably 85% by mole or more, more preferably 90% by mole or more, especially preferably 95 to 99.8% by mole. In case where the degree of saponification thereof is too low, there is a tendency that stability during polymerization for emulsion decreases, making it difficult to obtain the target aqueous emulsion.

In this description, the average degree of saponification can be determined according to the method of calculating the degree of saponification as provided for in JIS K 6726.

The average degree of polymerization of the PVA-based resin (a) having a 1,2-diol bond in a side chain thereof is preferably 50 to 3,000, more preferably 100 to 2,500, even more preferably 100 to 1,500, especially preferably 200 to 500. In case where the degree of polymerization thereof is too low, such a PVA-based resin tends to be difficult to produce industrially. In case where the degree of polymerization thereof is too high, the emulsion tends to have too high viscosity or stability during polymerization for emulsion tends to decrease.

In this description, the average degree of polymerization can be determined according to the method of calculating the average degree of polymerization as provided for in JIS K 6726.

The amount of the PVA-based resin (a) to be used as a protective colloid (dispersion stabilizer) in emulsion polymerization for producing an aqueous synthetic resin emulsion in the invention is preferably 3 to 20% by weight, more preferably 8 to 15% by weight, based on the amount of all polymerizable monomers used. In case where the used amount is too small, the amount of the protective colloid in emulsion polymerization is insufficient and this tends to result in poor polymerization stability. In case where the amount thereof is too large, the resultant emulsion, when used as an adhesive for wood parts/woody materials, tends to have reduced water resistance.

The PVA-based resin (a) used here will be wholly present in the aqueous synthetic resin emulsion to be formed by the polymerization. Namely, the PVA-based resin (a) will be present in the emulsion in an amount of preferably 3 to 20% by weight, more preferably 8 to 15% by weight, based on the synthetic resin.

Besides the PVA-based resin (a) described above, a combination thereof with an unmodified-type partially or

fully saponified PVA-based resin, any of various modified-type partially or fully saponified PVA-based resins, or the like may be used as a protective colloid (dispersion stabilizer) in the invention so long as this does not defeat of the object of the invention.

Usually, the PVA-based resin (a) is dissolved in an aqueous medium and this aqueous solution is used in the course of emulsion polymerization in the invention. The term "aqueous medium" herein means water or an alcoholic solvent comprising water as a main component, and preferably means water.

The amount of the PVA-based resin (a) (in terms of nonvolatile component) in this aqueous solution is not particularly limited. However, the amount thereof is desirably 5 to 30% by weight from the standpoint of handleability.

The term "PVA-based" means PVA itself or a PVA modified with, e.g., any of various modifying species (in the invention, modifying species other than the modifying species having a 1,2-diol bond). The degree of modification thereof is generally 20% by mole or less, preferably 15% by mole or less, more preferably 10% by mole or less. In case where the degree of modification thereof is too high, the reaction system is apt to increase in viscosity or gel during emulsion polymerization and a stable emulsion tends to be difficult to obtain.

Examples of the modifying species include olefins such as ethylene, propylene, isobutylene, $\alpha$-octene, $\alpha$-dodecene, and $\alpha$-octadecene, unsaturated acids such as acrylic acid, methacrylic acid, crotonic acid, maleic acid, maleic anhydride, and itaconic acid and salts or mono- or dialkyl esters of these acids, nitriles such as acrylonitrile and methacrylonitrile, amides such as acrylamide and methacrylamide, olefinsulfonic acids such as ethylenesulfonic acid, allylsulfonic acid, and methallylsulfonic acid and salts of these acids, alkyl vinyl ethers, polyoxyalkylene (meth)allyl ethers such as polyoxyethylene (meth)allyl ether and polyoxypropylene (meth)allyl ether, polyoxyalkylene (meth)acrylates such as polyoxyethylene (meth)acrylate and polyoxypropylene (meth)acrylate, polyoxyalkylene (meth)acrylamides such as polyoxyethylene (meth)acrylamide and polyoxypropylene (meth)acrylamide, polyoxyethylene 1-(meth)acrylamido-1,1-dimethylpropyl ester, polyoxyethylene vinyl ether, polyoxypropylene vinyl ether, polyoxyethylene allylamine, polyoxypropylene allylamine, polyoxyethylene vinylamine, polyoxypropylene vinylamine, N-acrylamidomethyltrimethylammonium chloride, allyltrimethylammonium chloride, dimethyldiallylammonium chloride, dimethylallyl vinyl ketone, N-vinylpyrrolidone, vinyl chloride, and vinylidene chloride. Other examples thereof include modifying species containing active hydrogen, such as those for acetoacetyl group modification, mercapto group modification, and diacetone acrylamide modification.

The synthetic resin to be dispersed and stabilized with the PVA-based resin (a) having a 1,2-diol bond in a side chain thereof will be explained next.

It is essential that the synthetic resin in the aqueous synthetic resin emulsions in the invention should include a polymer containing a styrene-based monomer as a hydrophobic monomer. Namely, it comprises a copolymer of hydrophobic monomers including a styrene-based monomer and hydrophilic monomers or comprises a polymer or copolymer of the hydrophobic monomers.

The hydrophobic monomers usually are monomers which are generally handled as hydrophobic monomers by persons skilled in the art. The hydrophobic monomers can be defined, with respect to physical properties, as polymerizable monomers having a solubility in water at 20°C of 0.1 % or less. They may be selected from acrylic-based monomers, styrene-based monomers, and vinyl-based monomers.

Examples of the acrylic-based monomers among such hydrophobic monomers include (meth)acrylates, especially aliphatic (meth)acrylates, which have an alkyl group with 4 or more carbon atoms, preferably 6 to 18 carbon atoms, such as n-butyl (meth)acrylate, isobutyl (meth)acrylate, t-butyl (meth)acrylate, 2-ethylhexyl (meth)acrylate, cyclohexyl (meth)acrylate, lauryl (meth)acrylate, octyl (meth)acrylate, and stearyl (meth)acrylate, aromatic (meth)acrylates such as phenoxyacrylates, and trifluoroethyl methacrylate. These may be used alone or in combination of two or more thereof.

The term "(meth)acrylate" herein means acrylate or methacrylate.

Examples of the styrene-based monomers among the hydrophobic monomers include styrene and $\alpha$-methylstyrene. These may be used alone or in combination of two or more thereof.
Examples of the vinyl-based monomers among the hydrophobic monomers include vinyl laurate, vinyl stearate, and vinyl versatate. These may be used alone or in combination of two or more thereof.

More preferred of those hydrophobic monomers are styrene, among styrene-based monomers, and n-butyl (meth)acrylate and 2-ethylhexyl (meth)acrylate, among other hydrophobic monomers. In addition, a combination of two or more hydrophobic monomers can be used in the polymerizable monomers according to the physical properties of the aqueous synthetic resin emulsion, or the like.

In the invention, the hydrophobic monomers serve as an essential ingredient constituting the synthetic resin contained in the aqueous synthetic resin emulsions of the invention. The amount of the hydrophobic monomers to be used must be 30% by weight or more based on all polymerizable monomers, and is preferably 40% by weight or more, more preferably 50% by weight or more, especially preferably 70% by weight or more. Although there is no particular upper limit on the amount thereof, it is generally 100% by weight or less, preferably 99.5% by weight or less, especially preferably 99% by weight or less. It is preferred that the polymerizable monomers should include a small amount of hydrophilic monomers. In case where the content of the hydrophobic monomers is too low, the desired water resistance

and weatherability are insufficient.

In the invention, the hydrophobic monomers include a styrene-based monomer as an essential polymerizable component. The amount of the styrene-based monomer to be used is generally 30% by weight or more, preferably 35% by weight or more, more preferably 40% by weight or more, based on all polymerizable monomers. As will be described later, the synthetic resin in the invention preferably has a glass transition temperature of from -20 to +30°C from the standpoint of obtaining the target physical properties. When this is taken into account, the amount of the styrene-based monomer to be used is generally 70% by weight or less, more preferably 60% by weight or less. It is preferred to use a hydrophilic monomer in combination therewith. In case where the content of the hydrophobic monomers is too low, the resultant emulsion gives a film insufficient in the desired properties, i.e., water resistance, warm-water resistance, boiling resistance, toughness, and weatherability.

The hydrophobic monomers including a styrene-based monomer may be copolymerized with copolymerizable monomers in the invention. As the copolymerizable monomers, examples thereof include, as (meth)acrylic-based monomers, (meth)acrylates, especially aliphatic (meth)acrylates, having an alkyl group with 3 or less carbon atoms, preferably 2 or less carbon atom, such as methyl (meth)acrylate, ethyl (meth)acrylate, and propyl (meth)acrylate. Vinyl-based monomers such as vinyl acetate and vinyl propionate are also usable.

It is preferred in the invention that a functional monomer should be copolymerized together with the hydrophobic monomers in the emulsion polymerization, from the standpoints of warm-water resistance and boiling resistance in application to wood parts/woody materials. This functional monomer preferably is one or more members selected from the group consisting of the following (1) to (7):

(1) an allyl group-containing monomer,
(2) a glycidyl group-containing monomer,
(3) a monomer comprising a hydrolyzable silyl group,
(4) an acetoacetyl group-containing monomer,
(5) a monomer having two or more vinyl groups in the molecular structure,
(6) a carbonyl group-containing monomer, and
(7) a hydroxyl group-containing monomer.

Examples of the allyl group-containing monomers (1) include monomers having two or more allyl groups, such as triallyloxyethylene, diallyl maleate, triallyl cyanurate, triallyl isocyanurate, and tetraallyloxyethane, allyl glycidyl ether, and allyl acetate. Of these, allyl glycidyl ether is preferred from the standpoint of wet adhesiveness.

Examples of the glycidyl group-containing monomers (2) include glycidyl (meth)acrylate, glycidyl (meth)allyl ether, and 3,4-epoxycyclohexyl (meth)acrylate. Of these, glycidyl (meth)acrylate is preferred from the standpoint of improving the water resistance of an adhesive for wood parts/woody materials.

Examples of the monomers comprising a hydrolyzable silyl group (3) include vinyltrimethoxysilane, vinyltriethoxysilane, vinyltris(β-methoxyethoxy)silane, vinylmethyldimethoxysilane, γ-methacryloxypropyltrimethoxysilane, γ-methacryloxypropylmethyldimethoxysilane, γ-acryloxypropyltrimethoxysilane, γ-acryloxypropylmethyldimethoxysilane, γ-methacryloxypropyltriethoxysilane, and γ-methacryloxypropylmethyldiethoxysilane. Of these, vinyltrimethoxysilane is preferred from the standpoint of wet adhesiveness.

Examples of the acetoacetyl group-containing monomers (4) include acetoacetic acid vinyl ester, acetoacetic acid allyl ester, diacetoacetic acid allyl ester, acetoacetoxyethyl (meth)acrylate, acetoacetoxyethyl crotonate, acetoacetoxypropyl (meth)acrylate, acetoacetoxypropyl crotonate, and 2-cyanoacetoacetoxyethyl (meth)acrylate. Of these, acetoacetoxyethyl (meth)acrylate is preferred from the standpoint of improving the water resistance of an adhesive for wood parts/woody materials.

Examples of the monomers having two or more vinyl groups in the molecular structure (5) include divinylbenzene, diallyl phthalate, triallyl cyanurate, triallyl isocyanurate, ethylene glycol di(meth)acrylate, 1,2-propylene glycol di(meth) acrylate, 1,3-propylene glycol di(meth)acrylate, 1,4-butanediol di(meth)acrylate, 1,6-hexanediol di(meth)acrylate, neopentyl glycol di(meth)acrylate, trimethylolpropane tri(meth)acrylate, and allyl (meth)acrylate.

Examples of the carbonyl group-containing monomers (6) include diacetone acrylamide.

Examples of the hydroxy group-containing monomers (7) include aliphatic (meth)acrylates such as 2-hydroxyethyl (meth)acrylate and hydroxypropyl (meth)acrylate. Of these, 2-hydroxyethyl methacrylate is preferred from the standpoint of improving the water resistance of an adhesive for wood parts/woody materials.

In a preferred embodiment of the invention, the functional monomer is preferably selected from the group consisting of glycidyl group-containing monomers (2), monomers comprising a hydrolyzable silyl group (3), acetoacetyl group-containing monomers (4), and hydroxy group-containing monomers (7). Especially preferably, the functional monomer comprises at least one of glycidyl group-containing monomers (2) and hydroxy group-containing monomers (7) from the standpoint of improving the warm-water resistance and boiling resistance of an adhesive for wood parts/woody materials.

The amount of the functional monomer to be used is preferably 0.01 to 10% by weight, more preferably 0.05 to 5% by weight, especially preferably 0.1 to 5% by weight, even more preferably 0.1 to 1% by weight, based on all copolymerizable monomers. Too small use amounts thereof tend to result in insufficient improvements in water resistance and wet adhesiveness. Too large use amounts thereof tend to result in a polymerization failure. A combination of two or more of those functional monomers can be used.

In the invention, the following copolymerizable monomers can be further used besides the copolymerizable monomers shown above, so long as this does not defeat the object of the invention.

The usable monomers are: olefin-based monomers such as ethylene; halogenated olefin-based monomers such as vinyl chloride; acrylamide-based monomers such as (meth)acrylamide, N,N-dimethylacrylamide, t-butylacrylamide, and 2-acrylamido-2-methylpropanesulfonic acid; nitrile-based monomers such as (meth)acrylonitrile; vinyl ether-based monomers such as methyl vinyl ether; and ethylenically unsaturated carboxylic acids such as (meth)acrylic acid and itaconic acid (anhydride) and ester-based monomers thereof.

In the course of the emulsion polymerization for producing an aqueous synthetic resin emulsion of the invention, other ingredients can be further used according to need besides the polymerizable monomer ingredients described above, such as the hydrophobic monomers and the functional monomer. Such other ingredients are not particularly limited so long as the use thereof does not reduce the properties of the aqueous synthetic resin emulsion, and can be suitably selected according to purposes. Examples of such other ingredients include a polymerization initiator, polymerization controller, auxiliary emulsifier, plasticizer, and coalescing agent.

As the polymerization initiator, any initiator usable for ordinary emulsion polymerization can be used without particular limitations. Examples thereof include inorganic peroxides such as potassium persulfate, sodium persulfate, and ammonium persulfate; peroxides such as organic peroxides, azo initiators, hydrogen peroxide, and butyl peroxide; and redox polymerization initiators comprising a combination of any of those compounds and a reducing agent such as acid sodium sulfite or L-ascorbic acid. Two or more of these may be used in combination.

Ammonium persulfate and potassium persulfate are preferred among them in the invention because these initiators facilitate the polymerization without adversely influencing film properties and strength enhancement.

The polymerization controller is not particular limited, and can be suitably selected from known ones. Examples of the polymerization controller include chain transfer agents and buffers.

Examples of the chain transfer agents include alcohols such as methanol, ethanol, propanol, and butanol; aldehydes such as acetaldehyde, propionaldehyde, n-butyraldehyde, furfural, and benzaldehyde; and mercaptans such as dodecyl mercaptan, lauryl mercaptan, normal mercaptan, thioglycolic acid, octyl thioglycolate, and thioglycerol. Two or more of these may be used in combination. Although the use of a chain transfer agent is effective in causing the polymerization to proceed stably, it lowers the degree of polymerization of the synthetic resin. There is hence a possibility that the resultant synthetic resin might give a film having reduced water resistance or give an adhesive for wood parts/woody materials which is reduced in wet adhesion strength or the like. It is therefore desirable that when a chain transfer agent is used, the amount of the agent to be used should be minimized.

Examples of the buffers include sodium acetate, ammonium acetate, sodium secondary phosphate, and sodium citrate. Two or more of these may be used in combination.

As the auxiliary emulsifier, any substance which is known to persons skilled in the art as an emulsifier usable in emulsion polymerization can be used. Consequently, the auxiliary emulsifier can be suitably selected from known ones such as, e.g., anionic, cationic, and nonionic surfactants, water-soluble polymers other than the PVA-based resin (a) which have the ability to function as a protective colloid, and water-soluble oligomers.

Preferred examples of the surfactants include anionic surfactants such as sodium lauryl sulfate and sodium dodecylbenzenesulfonate and nonionic surfactants such as ones having a Pluronic-type structure and ones having a polyoxyethylene-type structure. Also usable as the surfactants are reactive surfactants having a radical-polymerizable unsaturated bond in the structure.

The use of an emulsifier enables the emulsion polymerization to proceed smoothly and to be easily controlled. In addition, the use thereof has the effect of inhibiting coarse particles or coagula from generating during the polymerization.

However, in case where such a surfactant is used in a large amount as an emulsifier, this tends to result in a decrease in the degree of grafting.

It is therefore desirable that when a surfactant is used, it should be used in such an amount that this surfactant is auxiliary to the PVA-based resin (a), i.e., the amount thereof should be minimized.

Examples of the water-soluble polymers other than the PVA-based resin (a) which have the ability to function as a protective colloid include PVA-based resins other than the PVA-based resin (a), hydroxyethyl cellulose, polyvinylpyrrolidone, and methyl cellulose. These polymers have the effect of increasing the viscosity of the emulsion or changing the particle diameter of the emulsion to modify viscosity. However, there are cases where such a water-soluble polymer, when used in some amounts, reduces the water resistance of films. It is therefore desirable that when such a water-soluble polymer is used, it should be used in a small amount.

Preferred examples of the water-soluble oligomers include polymers or copolymers which have a degree of polymerization of about 10 to 500 and have hydrophilic groups such as sulfonic groups, carboxyl groups, hydroxyl groups, or alkylene glycol groups. Specific examples of the water-soluble oligomers include amide copolymers such as 2-methacrylamido-2-methylpropanesulfonic acid copolymers, sodium methacrylate/4-styrenesulfonate copolymers, styrene/maleic acid copolymers, melaminesulfonic acid/formaldehyde condensates, and poly(meth)acrylates. Examples thereof further include water-soluble oligomers obtained by polymerizing beforehand a monomer having a sulfonic group, carboxyl group, hydroxyl group, alkylene glycol group, or the like or a radical-polymerizable reactive emulsifier either alone or with other monomer(s). Of these, 2-methacrylamido-2-methylpropanesulfonic acid copolymers and sodium methacrylate/4-styrenesulfonate copolymers are preferred in the invention from the standpoint of stability to mixing with the pigments and fillers, e.g., calcium carbonate, which will be described later. A water-soluble oligomer obtained beforehand by polymerization prior to initiation of the emulsion polymerization may be used. Alternatively, a commercial product of a water-soluble oligomer may be used. Two or more of these may be used in combination.

As the plasticizer, use can be made of an adipate-based plasticizer, phthalic acid-based plasticizer, phosphoric acid-based plasticizer, or the like. In particular, dibutyl phthalate and the like are usable. A coalescing agent having a boiling point of 260°C or more is also usable.
The amount of such other ingredients to be used is not particularly limited so long as they do not defeat the object of the invention. The amount thereof can be suitably selected according to purposes.

A process for producing an aqueous synthetic resin emulsion of the invention is explained next.
As described above, an aqueous synthetic resin emulsion according to the invention can be produced by using the PVA-based resin (a) as a protective colloid to emulsion-polymerize copolymerizable monomers which comprise hydrophobic monomers including a styrene-based monomer and preferably further include a functional monomer.

Methods for the emulsion polymerization are not particularly limited. Examples thereof include: a monomer dosing type emulsion polymerization method in which water and a protective colloid are added in a reaction vessel and heated, and the copolymerizable monomers and a polymerization initiator are dropped thereinto; and an emulsified-monomer dosing type emulsion polymerization method in which the monomers to be dropped are dispersed/emulsified beforehand with a protective colloid and water and then dropped. However, the monomer dosing type is convenient from the standpoints of the control of the polymerization step or the like.

In conducting the emulsion polymerization, those other ingredients such as a polymerization initiator, polymerization controller, and auxiliary emulsifier are generally used according to need besides a protective colloid, an emulsifier, and the polymerizable monomer ingredients. Reaction conditions for the polymerization are not particularly limited, and can be suitably selected according to the kinds of the polymerizable monomers, purposes or the like.

The step of emulsion polymerization will be more specifically explained below.
First, water and a protective colloid are introduced into a reaction vessel optionally together with an auxiliary emulsifier, and the contents are heated (usually to 65 to 90°C). Thereafter, part of the polymerizable monomer ingredients and a polymerization initiator are introduced into this reaction vessel to conduct kick-off polymerization. Subsequently, the remaining polymerizable monomer ingredients are introduced into the reaction vessel either all at once or dropwise to cause polymerization to proceed while further adding the polymerization initiator according to need. At the time when the polymerization reaction is judged to have been completed, the reaction vessel is cooled. Thus, the target aqueous synthetic resin emulsion can be taken out.

The aqueous synthetic resin emulsion obtained by the emulsion polymerization in the invention typically is evenly milk-white. This emulsion has an average particle diameter of preferably 0.2 to 2 μm, more preferably 0.3 to 1.5 μm, from the standpoint of the stability of the emulsion.
The average particle diameter of the emulsion can be determined by an ordinary method, for example, with laser diffraction/scattering type particle size distribution analyzer "LA-910" (manufactured by Horiba Ltd.).

The glass transition temperature of the synthetic resin in the aqueous synthetic resin emulsion is preferably from -20 to +30°C from the standpoints of physical properties including adhesion strength or the like, and is especially preferably from -15 to +20°C. In case where the glass transition temperature thereof is too low, adhesion strength tends to decrease. In case where the glass transition temperature thereof is too high, it is desired to lower the film-forming temperature of this emulsion by incorporating a large amount of a plasticizer, e.g., dibutyl phthalate, and this tends to result in a decrease in adhesion strength resistance to warm water and boiling.

In the invention, hydrophobic monomers including a styrene-based monomer are incorporated as polymerizable components, whereby the resultant emulsion forms a film which is excellent especially in warm-water resistance, boiling resistance, toughness, and long-term durability. The effects of the invention are thus produced.

It is important in the invention that at least part of the PVA-based resin (a) should be grafted onto the synthetic resin and a large proportion of the resin (a) should be bonded to the surface of the resin particles through covalent bonds. This is preferred from the standpoints of the storage stability of the resultant undried aqueous emulsion itself and that such grafting reduces fluctuations of measured values in a measurement of adhesion strength.

In the case where the PVA-based resin (a) is grafted onto the synthetic resin, the value (G) represented by the

following equation (1) is preferably 50% by weight or more, more preferably 60 to 95% by weight, even more preferably 65 to 85% by weight. This value is a measure of the degree of grafting. In case where the value (G) is too low, this PVA-based resin (a) is reduced in protective-colloid function in the emulsion polymerization and this tends to result in a decrease in polymerization stability, decrease in compatibility with fillers, or the like. Examples of methods for regulating the value (G) calculated with the equation (1) to 50% by weight or more include: a method in which an emulsion polymerization temperature slightly higher than conventional ones is used; and a method in which a persulfate as a catalyst for polymerization is used in combination with a slight amount of a reducing agent (e.g., acid sodium sulfite or the like).

The value (G) in the equation (1) is calculated in the following manner. The emulsion or the like to be examined is dried at 40°C for 16 hours to form a film having a thickness of about 0.5 mm. The film is allowed to stand for 2 days under the conditions of 23°C and 65% RH. This film is extracted with boiling water for 8 hours and then extracted with acetone for 8 hours to remove the ungrafted resin, or the like. The value (G) is determined using the following equation, in which $w_1$ is the absolute dry weight (g) of the unextracted film and $w_2$ is the absolute dry weight (g) of the extracted film.

$$G\ (wt\%) = (w_2)/(w_1) \times 100 \qquad (1)$$

$w_1$: absolute dry weight of unextracted film (g)

$w_2$: absolute dry weight of extracted film (g)

Incidentally, the absolute dry weight of unextracted film ($w_1$) is one determined using a sample prepared separately from the extraction test sample, by drying this sample at 105°C for 1 hour and calculating the absolute dry film weight of this unextracted sample. The absolute dry weight of extracted film ($w_2$) is the weight of the extracted sample which has been dried at 105°C for 1 hour. Since the weights $w_1$ and $w_2$ are calculated using respective separate samples, the absolute dry film weights of the two samples were calculated through a correction with the proportions of volatile matter in the respective samples determined through the drying, so that the two samples were regarded as having been treated under the same conditions.

An aqueous synthetic resin emulsion of the invention is obtained by the method described above. Before being used in any of various applications, this emulsion is preferably regulated so as to have a nonvolatile content of generally 40 to 60% by weight.

In the invention, various additives may be further added according to need to the aqueous synthetic resin emulsion obtained by the emulsion polymerization. Examples of such additives include organic pigments, inorganic pigments, water-soluble additives, pH controllers, preservatives, and antioxidants.

The water-soluble additives are ones added for the purpose of improving re-emulsifiability in water when the re-emulsifiable emulsion powder obtained by drying the aqueous synthetic resin emulsion of the invention is dispersed in water.

When a water-soluble additive is used, the water-soluble additive is usually added to the aqueous synthetic resin emulsion which has been obtained by emulsion polymerization and has not been dried. It is preferred that the amount of the water-soluble additive to be used should be generally 2 to 30% by weight, preferably 5 to 20% by weight, especially preferably 8 to 15% by weight, based on the solid components of the aqueous synthetic resin emulsion before drying. In case where the water-soluble additive is used in too large an amount, the re-emulsifiable resin powder tends to have insufficient water resistance. In case where the amount thereof is too small, the improvement in re-emulsifiability tends to be insufficient.

Examples of the water-soluble additives include PVA-based resins, hydroxyethyl cellulose, methyl cellulose, starch derivatives, polyvinylpyrrolidone, polyethylene oxide, water-soluble alkyd resins, water-soluble phenolic resins, water-soluble urea resins, water-soluble melamine resins, water-soluble guanamine resins, water-soluble naphthalenesulfonate resins, water-soluble amino resins, water-soluble polyamide resins, water-soluble acrylic resins, water-soluble polycarboxylic acid resins, water-soluble polyester resins, water-soluble polyurethane resins, water-soluble polyol resins, and water-soluble epoxy resins. Two or more of these may be used in combination.

Of these, PVA-based resins are effective in improving re-emulsifiability in water. The PVA-based resin to be used may be the same as that used as a protective colloid in the step of emulsion polymerization or may be different from that. Although a PVA-based resin having a high degree of polymerization is difficult to use during polymerization because of its effect on polymerization stability, even such a PVA-based resin can be added after the polymerization without posing any particular problem. However, since PVA-based resins having a low solubility in water may exert an adverse influence on re-emulsifiability, it is desirable to ascertain the solubility in water of a PVA-based resin before this resin is used.

Furthermore, a modified PVA-based resin or the like obtained by modification with a functional group such as an acetoacetyl group, mercapto group, carboxyl group, sulfonic group, alkoxyl group, diacetone acrylamide group, or

group having a 1,2-diol bond in a side chain thereof can be used as a water-soluble additive in the invention.

The PVA or the acetoacetyl group-modified PVA, diacetone acrylamide group-modified PVA, or PVA having a 1,2-diol bond in a side chain thereof, as a water-soluble additive effective in improving re-emulsifiability in water, can be used in suitable combination with the compound to be used as a press-linking agent for the re-emulsifiable emulsion powder containing these, such as an isocyanate-based compound, (poly)hydrazide-based compound, aziridine-based compound, epoxy-group-containing compound, amine-based compound, aldehyde-based compound, methylolmelamine-based polymer, polyvalent-metal compound (e.g., aluminum salt, Zircozole salt, or calcium salt).

In the case where the cross-linking agent is a powder, a one-pack type re-emulsifiable emulsion powder composition can be obtained by incorporating a necessary amount of this cross-linking agent beforehand into a re-emulsifiable emulsion powder.

In the invention, the aqueous synthetic resin emulsion obtained by the emulsion polymerization is dried, whereby a re-emulsifiable emulsion powder can be obtained.

Methods for the drying are not particularly limited. Examples thereof include spray drying, freeze drying, and hot-air drying after flocculation. Of these, spray drying is preferred from the standpoints of production cost and energy saving.

In the case of spray drying, the type of spraying is not particularly limited. For example, a disk type, nozzle type, or the like can be used. Examples of heat sources for the spray drying include hot air and heated steam. Conditions of the spray drying can be suitably selected according to the size and kind of the spray dryer, the solid content, viscosity, flow rate of the aqueous emulsion or the like. The temperature for the spray drying is generally about 80 to 150°C.

In a specific example of the spray drying treatment, the solid content of the aqueous synthetic resin emulsion is first regulated. This emulsion is continuously supplied through the nozzle of a spray dryer to atomize the emulsion. The emulsion atomized is dried with hot air to thereby convert it into a powder.

In the invention, an anti-caking agent may also be incorporated, for example, by mixing the agent with the re-emulsifiable emulsion powder after the spray drying or by spraying the agent during the spray drying through a nozzle not for the aqueous synthetic resin emulsion. The addition of the anti-caking agent is intended to prevent the resin particles from caking, aggregating, blocking during storage and the like, by keeping the emulsion powder in the state of being covered with the anti-caking agent.

As the anti-caking agent can be used a known inert inorganic or organic powder such as calcium carbonate, talc, clay, dolomite, silicic acid anhydride, white carbon, or alumina white. Preferred of these are silicic acid anhydride, calcium carbonate, clay, and the like. The amount of the anti-caking agent to be used is preferably about 2 to 30% by weight, more preferably 5 to 20% by weight, especially preferably 8 to 15% by weight, based on the re-emulsifiable resin powder obtained.

The re-emulsifiable emulsion powder of the invention is obtained in the manner described above. Before being used in various applications, the powder is basically re-emulsified in water and returned to the original aqueous synthetic resin emulsion state.

The aqueous synthetic resin emulsion and re-emulsifiable emulsion powder of the invention and the aqueous synthetic resin emulsion obtained by re-emulsifying the re-emulsifiable emulsion powder are usable in various applications such as adhesives for wood parts/woody materials, additives for hydraulic materials such as various cements and plaster, powder coating materials, and inorganic finishing materials. Preferably, these are useful as adhesives for wood parts/woody materials or additives for hydraulic materials such as various cements and plaster.

In the invention, a cross-linking agent or a filler may be incorporated into the aqueous synthetic resin emulsion or re-emulsifiable emulsion powder of the invention or into the aqueous synthetic resin emulsion obtained by re-emulsifying the re-emulsifiable emulsion powder of the invention. Thus, the resultant composition can be used as an adhesive composition for the bonding of wood parts/woody materials.

The cross-linking agent is not particularly limited. It is, however, preferred to use an isocyanate-based compound or prepolymer thereof or an epoxy-based compound or prepolymer thereof.

The amount of the cross-linking agent to be used is preferably 1 to 40% by weight, more preferably 5 to 25% by weight, based on the whole weight of the adhesive composition. In case where the amount of the cross-linking agent is too small, the effect of cross-linking is insufficient and desired properties including adhesion strength tend to be difficult to obtain. Too large amounts thereof tend to result in an extremely shortened pot life of the adhesive and hence in poor workability.

As the filler, use can be made of finely particulate type of calcium carbonate, talc, dolomite, and the like. These may be used alone, or may be used as a mixture thereof according to purposes.

As stated above, the aqueous synthetic resin emulsion and re-emulsifiable emulsion powder of the invention and the aqueous synthetic resin emulsion of the invention obtained by re-emulsifying the re-emulsifiable emulsion powder have the effect of giving a film excellent in water resistance, warm-water resistance, boiling resistance, toughness, and durability. They are useful in various applications such as, in particular, adhesives for wood parts or woody materials, for paper or the like, inorganic finishing materials, coating materials, and admixtures for hydraulic materials such as cements/plaster.

EXAMPLES

The invention will be explained below in more detail by reference to Examples. However, the invention should not be construed as being limited to the following Examples unless the invention departs from the spirit thereof. In the following Examples, "parts" and "%" are by weight unless otherwise indicated.

<Production Examples for Producing Aqueous Synthetic Resin Emulsions>

[Emulsion 1]

Into a 2-L reaction vessel made of stainless steel and equipped with a stirrer and a reflux condenser were introduced 670 parts of water and 46 parts of a PVA (a) having a 1,2-diol bond in a side chain thereof (average degree of saponification: 99.1 % by mole; average degree of polymerization: 300; content of a 1,2-diol bond in a side chain: 8% by mole; manufactured by The Nippon Synthetic Chemical Industry Co., Ltd.) as a protective colloid. The reaction vessel was heated to 85°C to dissolve the PVA (a) in the water. Subsequently, while the temperature of this reaction vessel was kept at 80°C, 66 parts of a monomer mixture prepared beforehand (358 parts of n-butyl acrylate/293 parts of styrene/ 6.5 parts of glycidyl methacrylate = 54.4/44.6/1 (weight ratio) (hydrophobic monomers = 99%)) was introduced thereinto. 30% of an aqueous ammonium persulfate solution prepared by dissolving 1.6 g of ammonium persulfate in 30 g of water was added as a polymerization initiator to conduct kick-off polymerization for 1 hour. Subsequently, the remainder of the monomer mixture and 60% of the aqueous ammonium persulfate solution as a polymerization initiator were dropped into the reaction vessel over 4 hours to cause the polymerization to proceed. After completion of the dropwise addition, 10% of the aqueous ammonium persulfate solution was added and the reaction mixture was aged at that temperature for 1 hour. Thus, an aqueous synthetic resin emulsion having a nonvolatile content of 50% (emulsion 1) was obtained.

This synthetic resin, which has that monomer composition (n-butyl acrylate/styrene/glycidyl methacrylate = 54.4/44.6/1 (weight ratio)), has a glass transition temperature (Tg) of -2°C as determined by a calculation, on the assumption that the Tg of the homopolymers thereof are taken as -52°C, +100°C, and +41 °C, respectively.

[Emulsion 2]

The same procedure as for the production of emulsion 1 was conducted, except that the kinds and proportions of the monomers to be mixed were changed to n-butyl acrylate/2-ethylhexyl acrylate/styrene/glycidyl methacrylate = 20/25/54/1 (weight ratio) (hydrophobic monomers = 99%). Thus, emulsion 2 was produced.

This synthetic resin, which has that monomer composition (n-butyl acrylate/2-ethylhexyl acrylate/styrene/glycidyl methacrylate = 20/25/54/1 (weight ratio)), has a glass transition temperature (Tg) of +4°C as determined by a calculation, on the assumption that the Tg of the homopolymers thereof are taken as -52°C, -70°C, +100°C, and +41°C, respectively.

[Emulsion 3]

The same procedure as for the production of emulsion 1 was conducted, except that the kinds and proportions of the monomers to be mixed were changed to n-butyl acrylate/styrene/glycidyl methacrylate = 39.5/59.5/1 (weight ratio) (hydrophobic monomers = 99%). Thus, emulsion 3 was produced.

This synthetic resin, which has that monomer composition (n-butyl acrylate/styrene/glycidyl methacrylate = 39.5/59.5/1 (weight ratio)), has a glass transition temperature (Tg) of +20°C as determined by a calculation, on the assumption that the Tg of the homopolymers thereof are taken as -52°C, +100°C, and +41°C, respectively.

For the purpose of regulating the minimum film-forming temperature, dibutyl phthalate was added as a plasticizer in an amount of 10% based on the resin ingredient.

[Emulsion 4]

The same procedure as for the production of emulsion 1 was conducted, except that the kinds and proportions of the monomers to be mixed were changed to n-butyl acrylate/styrene/2-hydroxyethyl methacrylate = 53.4/43.7/2.9 (weight ratio) (hydrophobic monomers = 97.1%). Thus, emulsion 4 was produced.

This synthetic resin, which has that monomer composition (n-butyl acrylate/styrene/2-hydroxyethyl methacrylate = 53.4/43.7/2.9 (weight ratio)), has a glass transition temperature (Tg) of -1°C as determined by a calculation, on the assumption that the Tg of the homopolymers thereof are taken as -52°C, +100°C, and +55°C, respectively.

[Emulsion 5 (Comparative Example)]

The same procedure as for the production of emulsion 1 was conducted, except that the kinds and proportions of the monomers to be mixed were changed to 2-ethylhexyl acrylate/methyl methacrylate/2-hydroxyethyl methacrylate/glycidyl methacrylate = 25/62/12/1 (weight ratio) (hydrophobic monomer = 25%). Thus, emulsion 5 (Comparative Example) was produced.
This synthetic resin, which has that monomer composition (2-ethylhexyl acrylate/methyl methacrylate/2-hydroxyethyl methacrylate/glycidyl methacrylate = 25/62/12/1 (weight ratio)), has a glass transition temperature (Tg) of +33°C as determined by a calculation, on the assumption that the Tg of the homopolymers thereof are taken as -70°C, +105°C, +55°C, and +41°C, respectively.
For the purpose of regulating the minimum film-forming temperature, dibutyl phthalate was added as a plasticizer in an amount of 10% based on the resin ingredient.

[Emulsion 6 (Comparative Example)]

The same procedure as for the production of emulsion 1 was conducted, except that the kinds and proportions of the monomers to be mixed were changed to n-butyl acrylate/methyl methacrylate = 40/60 (weight ratio) (hydrophobic monomer = 40%). Thus, emulsion 6 (Comparative Example) was produced.
This synthetic resin, which has that monomer composition (n-butyl acrylate/methyl methacrylate = 40/60 (weight ratio)), has a glass transition temperature (Tg) of +21 °C as determined by a calculation, on the assumption that the Tg of the homopolymers thereof are taken as -52°C and +105°C, respectively.
For the purpose of regulating the minimum film-forming temperature, dibutyl phthalate was added as a plasticizer in an amount of 10% based on the resin ingredient.

<Production Examples for Producing Re-Emulsifiable Emulsion Powders>

[Emulsion Powder 1]

A PVA having an average degree of polymerization of 500 and an average degree of saponification of 88% by mole ("Gohsenol GL 05" (trade name), manufactured by The Nippon Synthetic Chemical Industry Co., Ltd.) was added (in the form of 20% aqueous PVA solution) to the emulsion obtained in Emulsion 1, in an amount of 7% based on the nonvolatile components of the emulsion. The nonvolatile content of the resultant emulsion was regulated to 40% by adding water thereto. This emulsion was spray-dried with 140°C hot air as a heat source using a nozzle type spray dryer in the presence of calcium carbonate as an anti-caking agent. Thus, emulsion powder 1 was obtained.

[Emulsion Powder 2]

The emulsion obtained in Emulsion 4 was treated in the same manner as for the production of emulsion powder 1 to obtain emulsion powder 2.

[Emulsion Powder 3 (Comparative Example)]

The emulsion obtained in Emulsion 5 (Comparative Example) was treated in the same manner as for the production of emulsion powder 1 to obtain emulsion powder 3.

(EXAMPLE 1)

To 200 parts of emulsion 1 were added the following three ingredients which had been mixed together beforehand: 8 parts of a partially saponified PVA having an average degree of polymerization of 1,400 and a degree of saponification of 88% by mole ("Gohsenol GM 14S (trade name), manufactured by The Nippon Synthetic Chemical Industry Co., Ltd.), 45 parts of calcium carbonate as a filler, and 2.5 parts of hydroxyethyl cellulose. The resultant mixture was sufficiently stirred, and 27 parts of water was further added to regulate the viscosity of the mixture to 50,000 to 60,000. Thus, an adhesive composition for wood parts/woody materials was obtained.

(EXAMPLES 2 TO 4)

Emulsions 2 to 4 were used to obtain adhesive compositions for wood parts/woody materials in the same manner as in Example 1. The amount of the water to be added later was regulated according to the viscosity of the

adhesive compositions for wood parts/woody material to be obtained (50,000 to 60,000 mPa·s (Brookfield viscometer, 10 rpm, 23°C)).

(EXAMPLE 5)

To 110 parts of water were added the following four ingredients which had been mixed together beforehand: 100 parts of emulsion powder 1 obtained from emulsion 1, 8 parts of a partially saponified PVA having an average degree of polymerization of 1,400 and an average degree of saponification of 88% by mole ("Gohsenol GM 14S (trade name), manufactured by The Nippon Synthetic Chemical Industry Co., Ltd.), 45 parts of calcium carbonate as a filler, and 2.5 parts of hydroxyethyl cellulose. The addition of the four ingredients was conducted so as not to form powder lumps. The resultant mixture was sufficiently mixed to obtain an adhesive composition for wood parts/woody materials. The amount of the water to be added later was regulated according to the viscosity of the adhesive composition for wood parts/woody materials to be obtained (50,000 to 60,000 mPa·s (Brookfield viscometer, 10 rpm, 23°C)).

(EXAMPLE 6)

Emulsion powder 2 was used to obtain an adhesive composition for wood parts/woody materials in the same manner as in Example 5.

(COMPARATIVE EXAMPLE 1)

Emulsion 5 was used to obtain an adhesive composition for wood parts/woody materials in the same manner as in Example 1. The amount of the water to be added later was regulated according to the viscosity of the adhesive composition for wood parts/woody materials to be obtained (50,000 to 60,000 mPa·s (Brookfield viscometer, 10 rpm, 23°C)).

(COMPARATIVE EXAMPLE 2)

Emulsion 6 was used to obtain an adhesive composition for wood parts/woody materials in the same manner as in Example 1. The amount of the water to be added later was regulated according to the viscosity of the adhesive composition for wood parts/woody materials to be obtained (50,000 to 60,000 mPa·s (Brookfield viscometer, 10 rpm, 23°C)).

(COMPARATIVE EXAMPLE 3)

Emulsion powder 3 was used to obtain an adhesive composition for wood parts/woody materials in the same manner as in Example 5.

<EVALUATION TESTS>

(Test 1: Average Particle Diameter of Emulsion)

The average particle diameter of the emulsion obtained in each Production Example for Producing Aqueous Synthetic Resin Emulsion was determined with laser diffraction/scattering type particle size distribution analyzer "LA-910" (manufactured by Horiba Ltd.).

(Test 2: Determination of Value (G) in Equation (1))

The absolute dry weight of unextracted film ($w_1$) is one determined using a sample prepared separately from the extraction test sample, by drying this sample at 105°C for 1 hour and calculating the absolute dry film weight of the unextracted sample through a correction with the proportion of volatile matter determined through the drying. The absolute dry weight of extracted film ($w_2$) is the weight of the extracted sample which has been dried at 105°C for 1 hour.

The emulsion obtained in each Production Example for Producing Aqueous Synthetic Resin Emulsion was dried at 40°C for 16 hours to form a film having a thickness of about 0.5 mm. The film was allowed to stand for 2 days under the conditions of 23 °C and 65% RH. This film was extracted with boiling water for 8 hours and then extracted with acetone for 8 hours to remove the ungrafted resin, etc. The value (G) was calculated using the following equation, in which $w_1$ is the absolute dry weight (g) of the unextracted film and $w_2$ is the absolute dry weight (g) of the extracted film.

$$G\ (wt\%) = (w_2)/(w_1) \times 100 \qquad (1)$$

$w_1$ : absolute dry weight of unextracted film (g)
$w_2$: absolute dry weight of extracted film (g)

Incidentally, the absolute dry weight of unextracted film ($w_1$) is one determined using a sample prepared separately from the extraction test sample, by drying this sample at 105°C for 1 hour and calculating the absolute dry film weight of this unextracted sample. The absolute dry weight of extracted film ($w_2$) is the weight of the extracted sample which has been dried at 105°C for 1 hour. Since the weights $w_1$ and $w_2$ were calculated using respective separate samples, the absolute dry film weights of the two samples were calculated through a correction with the proportions of volatile matter in the respective samples determined through the drying, so that the two samples were regarded as having been treated under the same conditions.

(Test 3: Wood Adhesion Evaluation/JIS K6804; vinyl acetate resin emulsion adhesive for wood)

The adhesive compositions obtained in Examples 1 to 6 and Comparative Examples 1 to 3 were examined for compressive shear wood adhesion strength according to the adhesion strength test method as provided for in JIS K 6804 (2003 publication).
The specific test method was as follows.
Straight-grain boards of birch as provided for in JIS K6804 were used. Each adhesive was applied to a bonding surface in an amount of 200 g/m$^2$, and the adherend board was placed thereon. After 10 minutes, this was pressed under a load of 0.8 MPa and kept in this state at 23°C for 24 hours. The pressure was removed, and the resultant sample was subjected to measurements after 48 hours.
Ordinary-State Test: A test piece was held for 48 hours in a test room having a temperature of 23°C and a humidity of 50% and then tested as it was.
Water-Resistance Test: A test piece was immersed in 30°C water for 3 hours, subsequently immersed in 23°C water for 10 minutes, and then tested in the wet state.
The results obtained were evaluated based on the following criteria in conformity with JIS Type 1 and Type 2 qualities.
Criteria for Judgment:

A: The adhesion strength in the ordinary-state test is 10 N/mm$^2$ or more and the adhesion strength in the water-resistance test is 4 N/mm$^2$ or more.
B: The adhesion strength in the ordinary-state test is less than 10 N/mm$^2$ and/or the adhesion strength in the water-resistance test is less than 4 N/mm$^2$

(Test 4: Wood Adhesion Evaluation/JIS K6806; aqueous polymer/isocyanate-based adhesive for wood)

To 100 parts of each of the adhesive compositions obtained in Examples 1 to 6 and Comparative Examples 1 to 3 was added 15 parts of a cross-linking agent (polydimethyldiphenyl diisocyanate; manufactured by Nippon Polyurethane Co., Ltd.). The resultant mixture was sufficiently stirred to obtain an adhesive composition. This composition was examined for compressive shear wood adhesion strength according to the adhesion strength test method as provided for in JIS K 6806 (2003 publication).
The specific test method was as follows
Straight-grain boards of birch as provided for in JIS K 6806 were used. The adhesive to which the cross-linking agent had been added was evenly applied in an amount of 125 g/m$^2$ to each of the surfaces to be bonded. The two bonding surfaces were brought into intimate contact with each other. This assemblage was clamped at a pressure of 1,200 kPa and allowed to stand in this state at 23°C for 24 hours. Thereafter, the pressure was removed, and the resultant sample was subsequently allowed to stand at that temperature for 72 hours and then subjected to measurements.
Ordinary-State Test: A test piece was produced and tested immediately thereafter.
Boiling Repetition Test: A test piece was immersed in boiling water for 4 hours, subsequently dried in air at 60°C for 20 hours, further immersed in boiling water for 4 hours, thereafter immersed in room-temperature water until the test piece cooled, and then tested in the wet state.
The results obtained were evaluated based on the following criteria in conformity with JIS Type 1, Number 1 performances.
Criteria for Judgment:

A: The compressive shear adhesion strength in ordinary state is 981 $N/cm^2$ or more and the compressive shear adhesion strength after boiling repetition is 588 $N/cm^2$ or more.
B: The compressive shear adhesion strength in ordinary state is less than 981 $N/cm^2$ and/or the compressive shear adhesion strength after boiling repetition is less than 588 $N/cm^2$.

The results of those evaluations are shown in Table 1.
[Table 1]

| | Average particle diameter (μm) | Value of (G) in equation (1) (%) | Wood adhesion evaluation according to JIS K 6804 | | | Wood adhesion evaluation according to JIS K 6806 | | |
|---|---|---|---|---|---|---|---|---|
| | | | Ordinary-state test ($N/mm^2$) | Water-resistance test ($N/mm^2$) | Evaluation | Ordinary-state test ($N/cm^2$) | Boiling repetition test ($N/cm^2$) | Evaluation |
| Example 1 (emulsion 1) | 0.45 | 76 | 13.0 | 7.32 | A | 1830 | 815 | A |
| Example 2 (emulsion 2) | 0.43 | 77 | 13.5 | 6.85 | A | 1680 | 720 | A |
| Example 3 (emulsion 3) | 0.43 | 78 | 11.3 | 6.10 | A | 1650 | 740 | A |
| Example 4 (emulsion 4) | 0.56 | 75 | 14.7 | 6.80 | A | 1950 | 805 | A |
| Example 5 (powder 1) | - | - | 13.8 | 7.10 | A | 1860 | 820 | A |
| Example 6 (powder 2) | - | - | 14.5 | 6.50 | A | 1880 | 780 | A |
| Comparative Example 1 (emulsion 5) | 0.51 | 67 | 13.3 | 3.72 | B | 1880 | 550 | B |
| Comparative Example 2 (emulsion 6 | 0.45 | 72 | 12.6 | 3.10 | B | 1620 | 490 | B |
| Comparative Example 3 (powder 3) | - | - | 13.5 | 3.60 | B | 1850 | 520 | B |

INDUSTRIAL APPLICABILITY

The aqueous synthetic resin emulsion and re-emulsifiable emulsion powder of the invention and the aqueous synthetic resin emulsion of the invention obtained by re-emulsifying the re-emulsifiable emulsion powder have the effect of giving a film excellent in water resistance, warm-water resistance, boiling resistance, toughness, and long-term durability. They are useful in various applications such as, in particular, adhesives for wood parts or woody materials, for paper inorganic finishing materials, coating materials, and admixtures for hydraulic materials such as cements/plaster.

**Claims**

1. An aqueous synthetic resin emulsion containing a synthetic resin dispersed and stabilized with a polyvinyl alcohol-based resin (a) having a 1,2-diol bond in a side chain thereof, wherein the synthetic resin comprises, as a polymerizable monomer which constitutes the synthetic resin, a hydrophobic monomer having a solubility in water at 20°C of 0.1% or less in an amount of 30% by weight or more based on all polymerizable monomers, the hydrophobic

monomer comprising a styrene-based monomer.

2. The aqueous synthetic resin emulsion according to claim 1, wherein the polyvinyl alcohol-based resin (a) having a 1,2-diol bond in a side chain thereof has a 1,2-diol bond content of 1 to 15% by mole, an average degree of saponification of 85% by mole or more, and an average degree of polymerization of 50 to 3,000.

3. The aqueous synthetic resin emulsion according to claim 1 or 2,
wherein the synthetic resin further comprises, as a comonomer component, at least one functional monomer selected from the group consisting of the following (1) to (7):

(1) an allyl group-containing monomer,
(2) a glycidyl group-containing monomer,
(3) a monomer comprising a hydrolyzable silyl group,
(4) an acetoacetyl group-containing monomer,
(5) a monomer having two or more vinyl groups in the molecular structure,
(6) a carbonyl group-containing monomer, and
(7) a hydroxyl group-containing monomer.

4. A re-emulsifiable emulsion powder which is a dried product of the aqueous synthetic resin emulsion according to any one of claims 1 to 3.

5. An aqueous synthetic resin emulsion which is obtained by re-emulsifying the re-emulsifiable emulsion powder according to claim 4.

6. An adhesive composition comprising the aqueous synthetic resin emulsion according to any one of claims 1 to 3 and 5 or the re-emulsifiable emulsion powder according to claim 4.

7. The adhesive composition according to claim 6, which further comprises a cross-linking agent.

## Patentansprüche

1. Wässrige synthetische Harzemulsion, die ein synthetisches Harz enthält, das mit einem Harz (a) auf Polyvinylalkoholbasis mit einer 1,2-Diolbindung in einer Seitenkette desselben dispergiert und stabilisiert ist, wobei das synthetische Harz, als ein polymerisierbares Monomer, das das synthetische Harz darstellt, ein hydrophobes Monomer mit einer Löslichkeit in 20 °C warmem Wasser von 0,1 % oder weniger in einer Menge von 30 Gewichts-% oder mehr basierend auf allen polymerisierbaren Monomeren umfasst, wobei das hydrophobe Monomer ein Monomer auf Styrolbasis umfasst.

2. Wässrige synthetische Harzemulsion nach Anspruch 1, wobei das Harz (a) auf Polyvinylalkoholbasis mit einer 1,2-Diolbindung in einer Seitenkette desselben einen Gehalt an 1,2-Diolbindungen von 1 bis 15 Mol-%, einen durchschnittlichen Verseifungsgrad von 85 Mol-% oder mehr und einen durchschnittlichen Polymerisationsgrad von 50 bis 3.000 aufweist.

3. Wässrige synthetische Harzemulsion nach Anspruch 1 oder 2, wobei das synthetische Harz ferner, als einen Comonomerbestandteil, zumindest ein funktionelles Monomer umfasst, das aus der Gruppe bestehend aus einem der folgenden Monomere (1) bis (7) ausgewählt ist:

(1) ein eine Allylgruppe enthaltendes Monomer,
(2) ein eine Glycidylgruppe enthaltendes Monomer,
(3) ein eine hydrolysierbare Silylgruppe enthaltendes Monomer,
(4) ein eine Acetoacetylgruppe enthaltendes Monomer,
(5) ein Monomer mit zwei oder mehr Vinylgruppen in den Molekularstruktur,
(6) ein eine Carbonylgruppe enthaltendes Monomer, und
(7) ein eine Hydroxylgruppe enthaltendes Monomer.

4. Reemulgierbares Emulsionspulver, das ein getrocknetes Produkt der wässrigen synthetischen Harzemulsion gemäß einem der Ansprüche 1 bis 3 ist.

5. Wässrige synthetische Harzemulsion, die durch Reemulgieren des reemulgierbaren Emulsionspulvers nach Anspruch 4 erhalten wird.

6. Klebstoffzusammensetzung, die die wässrige synthetische Harzemulsion gemäß einem der Ansprüche 1 bis 3 und 5 oder das reemulgierbare Emulsionspulver gemäß Anspruch 4 aufweist.

7. Klebstoffzusammensetzung nach Anspruch 6, die ferner ein Vernetzungsmittel aufweist.

## Revendications

1. Emulsion de résine synthétique aqueuse contenant une résine synthétique dispersée et stabilisée avec une résine à base de poly(alcool vinylique) (a) présentant une liaison 1,2-diol dans sa chaîne latérale, dans laquelle la résine synthétique comprend, comme monomère polymérisable qui constitue la résine synthétique, un monomère hydrophobe ayant une solubilité dans l'eau à 20°C de 0,1 % ou inférieure, dans une quantité de 30 % en masse ou supérieure rapportée à tous les monomères polymérisables, le monomère hydrophobe comprenant un monomère à base de styrène.

2. Emulsion de résine synthétique aqueuse selon la revendication 1, dans laquelle la résine à base de poly(alcool vinylique) (a) présentant une liaison 1,2-diol dans sa chaîne latérale présente une teneur en liaison 1,2-diol de 1 à 15 % en mole, un degré moyen de saponification de 85 % en mole ou supérieur, et un degré moyen de polymérisation de 50 à 3 000.

3. Emulsion de résine synthétique aqueuse selon la revendication 1 ou 2, dans laquelle la résine synthétique comprend de plus, comme un constituant comonomère, au moins un monomère fonctionnel choisi dans le groupe constitué des (1) à (7) suivants :

   (1) un monomère contenant un groupe allyle,
   (2) un monomère contenant un groupe glycidyle,
   (3) un monomère comprenant un groupe silyle hydrolysable,
   (4) un monomère contenant un groupe acétoacétyle,
   (5) un monomère présentant deux ou plusieurs groupes vinyle dans la structure moléculaire,
   (6) un monomère contenant un groupe carbonyle, et
   (7) un monomère contenant un groupe hydroxyle.

4. Poudre d'émulsion re-émulsionnable qui est un produit séché de l'émulsion de résine synthétique aqueuse selon l'une quelconque des revendications 1 à 3.

5. Emulsion de résine synthétique aqueuse qui est obtenue par ré-émulsionnement de la poudre d'émulsion re-émulsionnable selon la revendication 4.

6. Composition adhésive comprenant l'émulsion de résine synthétique aqueuse selon l'une quelconque des revendications 1 à 3 et 5 ou la poudre d'émulsion re-émulsionnable selon la revendication 4.

7. Composition adhésive selon la revendication 6, qui comprend de plus un agent de réticulation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003277419 A
- JP 50155579 A
- JP 10060015 A
- JP 58063706 A
- JP 2002060406 A
- JP 2005272481 A
- WO 2007060960 A
- WO 2007074674 A